# EUROPEAN PATENT APPLICATION

(11) **EP 3 514 641 A1**
(43) Date of publication of application: **24.07.2019**
(21) Application number: 19152898.3
(22) Date of filing: 21.01.2019
(51) Int. Cl.: G05B 19/418

(54) **SYSTEM TO MANAGE AND MONITOR A PLURALITY OF NUMERICAL CONTROL MACHINE TOOLS**

(30) Priority: 19.01.2018 IT 201800001507
(71) Applicant: HPT Sinergy S.r.l., 35131 Padova (IT)
(72) Inventor: Perrone, Vito, 26013 Crema (CR) (IT); Marzaro, Paolo, 30030 Pianiga (VE) (IT); Piccolo, Gabriele, 35012 Camposampiero (PD) (IT)
(74) Representative: Maroscia, Antonio

(57) **Abstract**

A system to manage and monitor a plurality of numerical control machine tools provided with respective controller devices (4), the system (1) having a central processing unit (5), on which a first software (9) is installed, and which comprises a first communication module (8), and a plurality of peripheral processing units (10), each associated with a respective machine tool (2) and comprising a second communication module (13) for communication with the first communication module (8) and on which a second software (14) is installed. The first software (9) implements a first database (16) and the second software (14) implements a second database (17) for each machine tool (2). The second database (17) collects production and operation data from the related machine tool (2) and the first database (16) collects a synchronized copy of the data from the second database (17) of each machine tool (2).

## Description

### CROSS-REFERENCE TO RELATED APPLICATIONS

This patent application claims priority from Italian patent application no. 102018000001507 filed on 19/01/2018.

### TECHNICAL FIELD

The present invention relates to a system to manage and monitor a plurality of numerical control machine tools.

In particular, the present invention finds advantageous, but not exclusive, application in the management and monitoring of a discontinuous group of machine tools, such as those located within a machine shop, to which the following description will make explicit reference without thereby losing generality.

### BACKGROUND ART

Modern machine shops typically comprise a discontinuous group of machine tools, i.e. not arranged along a production line and designed to work independently of one another. A workpiece must often be machined by several machine tools and the sequence of use thereof depends on the type of the workpiece.

In order to increase the profitability and efficiency of the machine shop, the latter comprises a management system consisting of a computer on which a management software is installed to take into account the production orders, machine tool execution times and sequence of use of the machine tools. However, the simple management system described above does not allow the machine shop to reach a very high efficiency.

### DISCLOSURE OF INVENTION

The object of the present invention is to provide a system to manage and monitor a discontinuous group of machine tools, which system is free from the drawbacks described above and at the same time easy and inexpensive to manufacture.

In accordance with the present invention, there is provided a system to manage and monitor a plurality of numerical control machine tools, as defined in the appended claims.

### BRIEF DESCRIPTION OF THE DRAWINGS

The present invention will now be described with reference to the accompanying drawings, which illustrate a non-limiting embodiment thereof, in which:
- Figure 1 shows in a simplified manner a plurality of machine tools and a system for the management and monitoring of machine tools according to the teachings of the present invention; and
- Figure 2 shows a block diagram of a plurality of applications of a software installed in a central processing unit and in each of a plurality of peripheral processing units of the management and monitoring system in Figure 1.

### BEST MODE FOR CARRYING OUT THE INVENTION

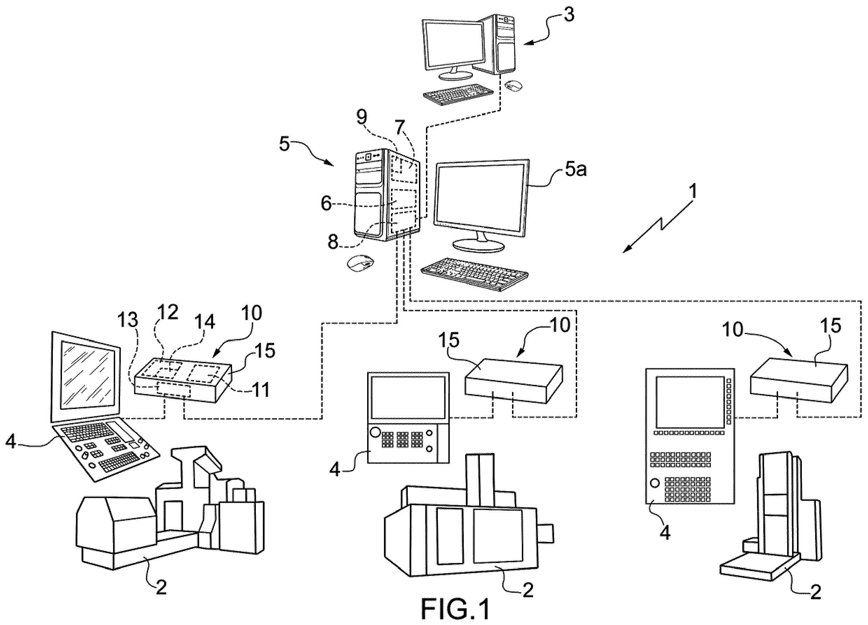

In Figure 1, reference numeral 1 generally designates, as a whole, the management system of the present invention for managing a plurality of numerical control machine tools, designated by reference numeral 2, and in particular a plurality of computer numerical control (CNC) machines. For example, the machine tools 2 are a discontinuous group of machine tools of a machine shop or industrial plant comprising a well-known management information system 3 of its own. Each machine tool 2 comprises a well-known respective controller device 4, for example consisting of a programmable logic controller (PLC) provided with at least one communication module operating according to a standard communication protocol, for example the TCP/IP protocol, and with a screen to display a graphical user interface that allows a user to interact with the controller.

The management and monitoring system 1 comprises a central processing unit 5, which comprises a screen 5a, a processor 6, a memory 7, a communication module 8 and a first software 9 installed in the memory 7 so as to be executed by the processor 6. The management and monitoring system 1 further comprises a plurality of peripheral processing units 10, each associated with a respective machine tool 2 and comprising a respective processor 11, a respective memory 12, a respective communication module 13 so as to communicate with the communication module 8 and the related controller device 4, and a second software 14 installed in the memory 12 so as to be executed by the processor 11.

The communication modules 8 and 13 adopt the same communication protocol as the communication module of the controller devices 4, for example the TCP/IP communication protocol. Preferably, the communication module 13 of each peripheral processing unit 10 is connected to the communication module of the related controller device 4 and to the communication module 8 via Ethernet cables through two respective Ethernet switches, which are known per se and therefore not shown. Each peripheral processing unit 10 is uniquely identified by the addressing method of the communication protocol used by the communication modules 8 and 13, for example the IP addressing scheme.

The central processing unit 5, for example, consists of a workstation computer and communicates with the management information system 3, for example through the communication module 8, or in any case through an Ethernet cable using the TCP/IP protocol. Each of the peripheral processing units 10, for example, consists of an industrial computer and is enclosed in a box 15 which can be positioned inside the electrical cabinet (not shown) on board the respective machine tool 2.

To facilitate the understanding of the invention, the software 9 and 14 will be hereinafter designated as the server software 9 and the client software 14, respectively.

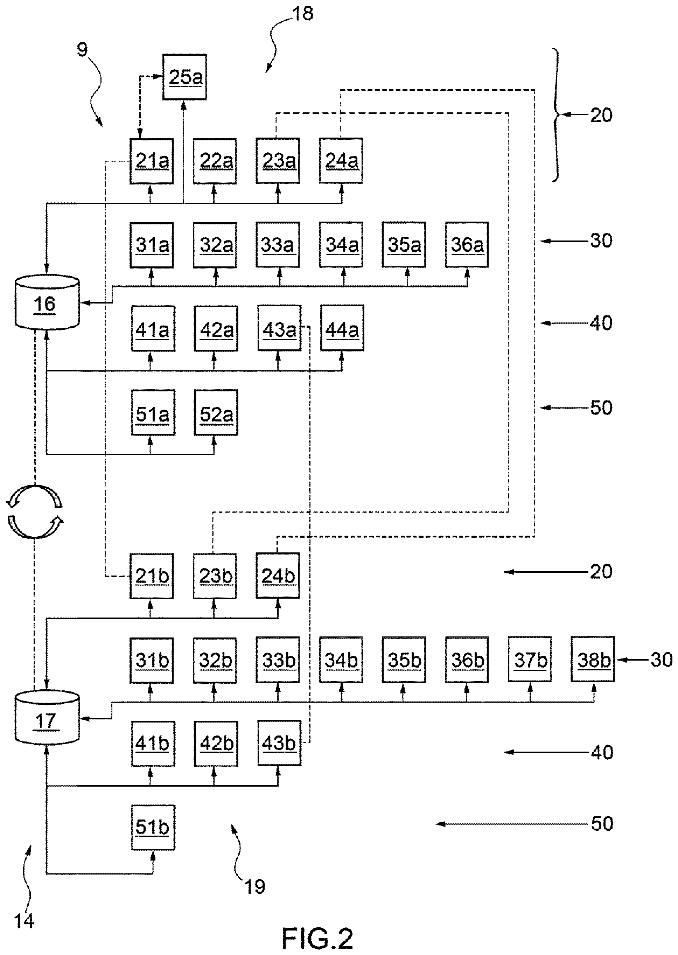

With reference to Figure 2, the client software 14, when installed in the memory 12, implements a database 17 that collects production and operation data from the related machine tool 2, and the server software 9, when installed in the memory 7, implements a database 16 that collects a synchronized copy of the data from the database 17 of each machine tool 2. In other words, the database 16 comprises a plurality of portions of data, each portion of data being associated with a respective machine tool 2 and synchronized with the related database 17.

The server software 9 comprises first software applications 18, which are designed to process the data from the database 16 and are divided into a number of application families, and the client software 14 installed in each peripheral processing unit 10 comprises second software applications 19, which are designed to process the data from the related database 17 and are divided into the same application families.

Moreover, the server software 9 is designed to implement, when executed by the processor 6, a graphical user interface that allows a user to access both the applications 18 and the applications 19.

In the example shown in Figure 2, the application families are four. A first family, designated by reference numeral 20, comprises software applications designed to manage the productivity of the machines tools 2. A second family, designated by reference numeral 30, comprises software applications designed to monitor the operating state of the machines tools 2. A third family, designated by reference numeral 40, comprises software applications designed to manage the maintenance of the machines tools 2. A fourth family, designated by reference numeral 50, comprises software applications designed to simulate work programs of the machine tools 2 and/or generate virtual models for the behaviour of the machine tools 2.

Typically, each machine tool 2 comprises sensor means, known per se and therefore not shown, designed to acquire measured values of physical quantities relating to the machine tool 2 or to the operation of the same and interfaced with the respective controller device 4. For example, the aforesaid sensor means comprise at least one accelerometer mounted on the machine tool 2, for example in the vicinity of a tool of the machine tool 2 or on an electrospindle of the machine tool 2, and one or more temperature sensors mounted in respective significant points of the machine tool 2. The software applications of the second family 30 are designed to store the measured values in the database 17 related to the machine tool 2 and process said measured values in order to monitor the operating state of the machine tool 2.

The software applications 18 of the first family 20 comprise an application 21a to generate and manage production orders and translate them into work sequences to be executed on the machine tools 2. A work sequence comprises at least one machine program, better known as a part program, and at least one sequence of operations to be executed on a given machine tool 2, collected in one or more electronic files. The application 21a sends each production order and the related work sequence to the peripheral processing units 10 of the machine tools 2 required to fulfil the production order. The application 21a saves the production orders and related work sequences in the database 16.

Preferably, the software applications 18 of the first family 20 comprise an application 22a to calculate an overall efficiency index for the machine tools 2 executed on the basis of data from each machine tool 2, including data on the machine's work availability, productivity data in the ideal machine cycle, and quality data on the pieces produced by the machine. The work availability of a machine tool 2 is the time during which the machine remains powered on and operational, i.e. excluding the intervals of time required for maintenance and those due to machine downtime caused by failure, in relation to the total available time.

Those software applications 19 installed in the peripheral processing unit 10 of each machine tool 2 that belong to the first family 20 comprise an application 21b to receive the production orders and work sequences generated by the application 21a, display these production orders and transfer the machine program to the controller device 4 of the machine tool 2.

Once the machine tool 2 has executed the assigned work sequence, the respective controller device 4 may optionally modify the machine program and send the completed work event and the machine program, if modified, to the related peripheral processing unit 10, in which the application 21b, in turn, will send the completed work event and the work sequence to the application 21a of the central processing unit 5.

Therefore, the applications 21a and 21b communicate with one another.

Preferably, those software applications 19 installed in the peripheral processing unit 10 that belong to the family 20 of each machine tool 2 comprise an application 23b to determine the tool requirements of the machine tool 2 needed to execute the required related work programs.

In the case in which at least one machine tool 2 is provided with a plurality of pallets for unloading the machined workpieces, or with a dedicated pallet station, where the pallets are moved and deposited in a working area of the machine tool 2, the software applications 19 of the first family 20 installed in the processing unit 10 of each machine tool 2 preferably comprise an application 24b to configure and manage said machine tool 2.

Those software applications 19 installed in the processing unit 10 of each machine tool 2 that belong to the family 30 comprise an application 31b to continuously monitor the operating state of the machine tool 2 and to command the stopping of the machine tool 2 in the event that the operating state develops a fault. The application 31b is designed to store the measured values of physical quantities acquired by the sensor means of the respective machine tool 2 in the respective database 17 and process these measured values in order to monitor the operating state.

Preferably, those software applications 19 installed in the processing unit 10 of each machine tool 2 that belong to the family 30 comprise, in addition to the above application 31b, at least one further application selected from a group of seven applications, designated by reference numerals 32b, 33b, 34b, 35b, 36b, 37b and 38b in Figure 2 and described below.

The application 32b is designed to access the diagnostic and alarm functions of the machine tool 2 supplied by the respective controller device 4.

The application 33b is designed to check whether or not first geometric parameters, such as for example the zero position and various misalignments, of at least one of the heads and/or machining accessories of the machine tool 2 are maintained during the relevant machining process. Advantageously, the application 33b is also designed to control tool actuators in order to bring those first changed geometric parameters back to respective initial values. Advantageously, the application 33b is also designed to generate an error message if the changes are so large as to require the intervention of skilled personnel.

The application 34b is designed to check whether or not second geometric parameters of the machine tool 2 are maintained in their entirety. Advantageously, the application 34b has the option to control actuators of the machine tool 2 in order to automatically bring those second changed geometric parameters back to respective initial values. Advantageously, the application 34b has the option to perform electronic compensation which allows the changes in the second parameters to be recovered. Advantageously, the application 34b has the option of having the machine tool 2 only perform machining that does not require high accuracy, for example a roughing of a workpiece or a semi-finishing of the workpiece.

The application 35b is designed to control the operation of the machine tool 2 when the latter is not actually machining a workpiece, so as to reduce the energy consumption of the machine tool 2 itself.

The application 36b is designed to monitor the level of vibrations generated by a tool during the machining of a workpiece, on the basis of vibration acceleration measured values acquired by an accelerometer mounted on the machine tool 2. The vibration acceleration measured values are those acceleration values typical, in terms of frequency and amplitude, of vibrations, and not simply of normal movements of mechanical parts. Vibrations greatly affect both the quality of the machined workpieces and the life of the mechanical components of the machine tools 2. The vibration acceleration measured values are stored in the relevant database 17.

Advantageously, the application 36b is designed to detect any collision between the workpiece under machining and the tool or parts of the machine tool 2 on the basis of the vibration acceleration measured values. In particular, if the vibration acceleration measured values exceed a first threshold value, then a collision event is generated. Advantageously, the application 36b is designed to command the stopping of the machine tool 2 following a collision event.

The application 37b is designed to monitor the balancing state of an electrospindle of the machine tool 2 on the basis of measured values acquired by an accelerometer mounted on the electrospindle. Acceleration measured values exceeding a second threshold value are stored in the relevant database 17 and cause the generation of a request for maintenance of the electrospindle.

Advantageously, the application 36b is designed to perform self-learning of the average vibration level during a sample machining in order to adjust the first threshold value and, if the application 37b is present, the second threshold value according to the type of machining to be carried out.

The application 38b is designed to monitor the thermal state of the machine tool 2 on the basis of measured values acquired by temperature sensors mounted on several positions of the machine tool 2. The temperature measured values are stored in the relevant database 17. Advantageously, the application 38b is designed to calculate the extent of the thermal deformations of the machine tool 2 as a function of the measured temperature values and of a technical model of the machine tool 2 pre-stored in the relevant database 17.

Those software applications 19 installed in the processing unit 10 of each machine tool 2 that belong to the family 40 comprise at least one of the applications designated by reference numerals 41b, 42b and 43b in Figure 2 and described below.

The application 41b allows access to a user and maintenance manual and to diagrams of the machine tool 2, stored in an interactive and contextual electronic format in the relevant database 17. Advantageously, the application 41b is configured to interact with the controller device 4 of the machine tool 2 so as to allow the above manual and diagrams to be displayed by the screen of the controller device 4.

The application 42b is designed to manage the alerts for maintenance of the machine tool 2, these alerts being generated as a function of signals transmitted by the sensor means of the machine tool 2 or by a scheduled maintenance calendar stored in the relevant database 17.

The application 43b is designed to open a streaming video channel to display images captured by a video camera mounted on the machine tool 2 so as to frame a particular working area of the machine tool. Advantageously, the application 43b is configured to interact with the controller device 4 of the machine tool 2 so that the captured images are displayed in streaming mode by the screen of the controller device 4.

Those software applications 19 installed in the processing unit 10 of each machine tool 2 that belong to the family 50 comprise at least one application, designated by reference numeral 51b in Figure 2, which is designed to execute a known algorithm to generate a virtual model for the physical behaviour of the machine tool 2 with the purpose of predicting and optimizing the behaviour itself.

The software applications 18 that belong to the first family 20 comprise at least one further application selected from a group of two applications, which are designated by reference numerals 23a and 24a.

The application 23a is designed to perform the following functions:
- generating a tool loading and unloading list for each machine tool 2, i.e. a list of tools to be loaded or unloaded by the machine tool 2 in order to perform a certain work sequence, by collecting information from the applications 23b of the peripheral processing units 10 of all the machine tools 2;
- sending the tool loading and unloading lists directly to the peripheral processing units 10 involved in the work sequence;
- optionally integrating with a tool preset unit, i.e. a unit measuring the overall dimensions and specific features of the tools, such as, for example, the diameter and length.

The application 23a saves a plurality of data relating to the tool loading and unloading lists in the database 16.

The applications 23b of the machine tools 2 involved in the work sequence receive the respective tool loading and unloading lists sent by the application 23a.

The application 24a is designed to coordinate the management of the pallets of the machine tools 2, by generating relevant piece loading and unloading lists and sending the piece loading and unloading lists to the peripheral processing units 10 of the machine tools 2 involved in a given work sequence. The application 24a saves a plurality of data relating to the piece loading and unloading lists in the database 16. The applications 24b of the machine tools 2 involved in the work sequence receive the piece loading and unloading list sent by the application 24a.

The meaning of the interactions between the application 23a and the many applications 23b and between the application 24a and the many applications 24b described above is justified by the fact that the application 21a acts as a supervision entity that analyses and decides which machine tools 2 will be used to execute the work sequence according to the types of the machines themselves, the tools carried by the machines and the loading state of the pallets associated with the machines.

Advantageously, the software applications 18 that belong to the first family 20 comprise at least one further application 25a designed to plan the production of the entire group of machine tools 2, by mainly communicating with the application 21a and directly accessing the database 16.

In particular, the application 25a is designed to plan the production autonomously by adapting to the situation represented by the data contained in the database 16. In more detail, the application 25a analyses the data from the database 16, which contains a replica of all the databases 17 associated with all the machine tools 2, and on the basis of these data and system input data shared with the application 21a, such as for example the number of pieces to be produced, machining tolerances, roughness, etc.), is able to work out the best production cycle in order to achieve a specific result, such as for example the minimum production cost, minimum waste, maximum quality, etc.

The software applications 18 that belong to the second family 30 comprise at least one application selected from a group of six applications, which are designated by reference numerals 31a-36a in Figure 2 and are essentially a replica of the corresponding applications 31b-36b, meaning that they are designed to perform the same type of actions as the corresponding software applications 19, but on the data from the database 16, and are designed to acquire a user selection to select the peripheral processing unit 10, and thus the machine tool 2, on which to perform these actions.

The software applications 18 that belong to the third family 40 comprise at least one application selected from a group of four applications, which are designated by reference numerals 41a-44a in Figure 2.

The applications 41a and 42a are essentially a replica of the corresponding applications 41b and 42b, meaning that they are designed to perform the same type of actions as the corresponding software applications 19, but on the data from the database 16, and are designed to acquire a user selection to select the peripheral processing unit 10, and thus the machine tool 2, on which to perform these actions.

The application 43a is designed to connect to the application 43b of the peripheral processing unit 10 of a machine tool 2 selected for directly displaying the streaming of images captured by the video camera mounted on said machine tool 2. For this purpose, the application 43a is designed to acquire a user selection to select the machine tool 2 from which to take the streaming of images.

The application 44a is designed to connect via computer the central processing unit 5 to a remote service centre. For this purpose, the communication module 8 is connected directly to the internet or to a telephone network. Since the communication module 8 is also connected to the management information system 3, the computerized connection alternatively occurs through the management information system 3. The application 44a enables the service centre to intervene remotely following a request for intervention by a user.

The software applications 18 that belong to the fourth family 50 comprise at least one application selected from a group of two applications, which are designated by reference numerals 51a and 52a in Figure 2.

The application 51a is essentially a replica of the corresponding application 51b, meaning that it is designed to perform the same processing as the corresponding software application 19, but on the data from the database 16, and is designed to acquire a user selection to select the peripheral processing unit 10, and thus the machine tool 2, on which to perform this processing.

The application 52a allows access to a simulation environment of the controller device 4 of each of the machine tools 2, this simulation environment being of a known type. For this purpose, the application 52a is designed to acquire a user selection to select the peripheral processing unit 10, and thus the machine tool 2, on which to set up and run a simulation of a machining process. The application 52a provides the management and monitoring system 1 with the following advantages:
- it allows the creation and testing of optimized work programs for machine tools 2, which reduce the downtime of the machine tools 2;
- it allows the testing of work programs created in a CAD/CAM system; and
- it allows training and specialization courses to be performed on the machine tools 2.

The main advantage of the management and monitoring system 1 described above is therefore the provision of a plurality of software tools, which allow the efficiency of a discontinuous group of machine tools 2 of an industrial plant or of a simple machine shop to be enhanced.

Finally, it is noted that the management and monitoring system 1 described above is also suitable for a group of machines comprising, in addition to numerical control machine tools, also preset machine tools and/or measuring machines, provided that each machine is provided with a respective controller device 4.

## Claims

1. A system to manage and monitor a plurality of numerical control machine tools comprising respective controller devices (4), the system (1) comprising: a central processing unit (5), which comprises first processor means (6), first memory means (7), first communication means (8) and first software means (9) installed in the first memory means (7) so as to be executed on the first processor means (6); and a plurality of peripheral processing units (10), each associated with a respective machine tool (2) and comprising respective second processor means (11), respective second memory means (12), respective second communication means (13) to communicate with said first communication means (8) and with the related controller device (4), and second software means (14) installed in the second memory means (12) so as to be executed on said second processor means (11); the first software means (9) implementing a first database (16) and the second software means (14) implementing a second database (17) for each machine tool (2); the second database (17) collecting production and operation data from the related machine tool (2) and the first database (16) collecting a synchronized copy of the data from the second database (17) of each machine tool (2).

2. The system according to claim 1, wherein said first software means (9) comprise first software applications (18), which are designed to process the data of the first database (16) and are divided into a number of application families, and the second software means (14) comprise second software applications (19), which are designed to process the data of the related second database (17) and are divided into the same application families.

3. The system according to claim 2, wherein said application families comprise a first family (20) comprising software applications (21a-24a, 21b, 23b, 24b) designed to manage the productivity of the machine tools.

4. The system according to claim 2 or 3, wherein said application families comprise a second family (30) comprising software applications (31a-36a, 31b-38b) designed to monitor the operating state of the machine tools.

5. The system according to claim 4, wherein each machine tool (2) comprises respective sensor means, which are interfaced with the respective controller device (4) so as to acquire measured values of physical quantities related to the machine tool (2); the software applications (31a-36a, 31b-38b) of said second family (30) being designed to store said measured values in the second database (17) related to the machine tool (2) and process said measured values in order to monitor said operating state.

6. The system according to any one of the claims from 2 to 5, wherein said application families comprise a third family (40) comprising software applications (41a-44a, 41b-42b) designed to manage the maintenance of the machine tools (2) .

7. The system according to any one of the claims from 2 to 6, wherein said application families comprise a fourth family (50) comprising software applications (51a, 52a, 51b) designed to simulate work programs of the machine tools (2) and/or generate machine tool behavioural virtual models.

8. An industrial plant comprising a discontinuous group of numerical control machine tools, each comprising a respective controller device (4), and a system to manage and monitor the machine tools according to any one of the claims from 1 to 7.
